# EUROPÄISCHE PATENTSCHRIFT

(11) **EP 4 420 036 B1**
(45) Veröffentlichungstag und Bekanntmachung des Hinweises auf die Patenterteilung: **27.08.2025**
(21) Anmeldenummer: 22808958.7
(22) Anmeldetag: 20.10.2022
(51) Int. Cl.: G06K 19/077, G06K 19/02

(54) **KARTENFÖRMIGER DATENTRÄGER UMFASSEND HOLZ**
CARD-SHAPED DATA CARRIER COMPRISING WOOD
SUPPORT DE DONNÉES EN FORME DE CARTE COMPRENANT DU BOIS

(30) Priorität: 21.10.2021 DE 102021005252
(43) Veröffentlichungstag der Anmeldung: 28.08.2024
(73) Patentinhaber: Giesecke+Devrient ePayments GmbH, 81677 München (DE)
(72) Erfinder: RIEDL, Josef, 85395 Attenkirchen (DE); TARANTINO, Thomas, 83410 Laufen (DE); TARANTINO, Peter, 80687 München (DE)
(74) Vertreter: Giesecke+Devrient IP
(86) Internationale Anmeldenummer: PCT/EP2022/025479
(87) Internationale Veröffentlichungsnummer: WO 2023/066525

(56) Entgegenhaltungen:
- EP-A1- 3 499 424
- ANONYMOUS: "Elastizitätsmodul", WIKIPEDIA, 27 November 2018 (2018-11-27), pages 1 - 4, XP055742177, Retrieved from the Internet <URL:https://de.wikipedia.org/w/index.php?title=Elastizitätsmodul&oldid=183140822> [retrieved on 20201021]
- "Taschenbuch Physik", 19 June 2003, ISBN: 978-3-8171-1627-0, article HORST STÖCKER: "Taschenbuch Physik", pages: 224 - 225, XP055241119

## Beschreibung

Die vorliegende Erfindung betrifft einen kartenförmigen Datenträger, insbesondere eine Smart Card, welche Holz umfasst.

Aus dem Stand der Technik sind eine Vielzahl von kartenförmigen Datenträgern, beispielsweise Smart Cards, Chipkarten, Dual-Interface-Karten, Integrated-Circuit-Cards oder Identifikationskarten, bekannt. Weiterhin ist es bekannt, für die Herstellung von kartenförmigen Datenträgern unterschiedliche Komponenten für eine kontaktbasierte und/ oder kontaktlose Datenübertragung zu verwenden, wie beispielsweise ein Chipmodul mit einem Chip und einer Kontaktstruktur, einen Kartenkörper, in welchem das Chipmodul angeordnet ist und/oder weitere Komponenten, wie beispielsweise eine Antenne oder einen Kondensator für eine kontaktlose Datenübertragung.

Es ist bekannt, dass derartige Datenträger bzw. Karten im Allgemeinen aus thermoplastischen Materialien wie Polyvinylchlorid (PVC) und Polyethylenterephthalat (PET) hergestellt werden. In den letzten Jahren hat jedoch das zunehmende Umweltbewusstsein die Aufmerksamkeit auf die Verwendung biologisch abbaubarer und umweltfreundlicher Materialien gelenkt. Insbesondere ist es bekannt, kartenförmige Datenträger mit einer Holzschicht, beispielsweise als Overlay oder Deckschicht bereitzustellen. Kartenförmige Datenträger, welche beispielsweise eine Holzschicht aufweisen, weisen jedoch eine große Anisotropie aufgrund der Holzfasern auf. Zudem kann der kartenförmige Datenträger aufgrund der Faserstruktur des Holzes zwar biegsam sein, jedoch verbleibt ein gebogener kartenförmiger Datenträger meist in der gebogenen Position und muss manuell zurück gebogen werden. Dies stellt einen manuellen Aufwand für den Benutzer des kartenförmigen Datenträgers dar. Auch kann die komfortable und sichere Benutzung des kartenförmigen Datenträgers aufgrund von möglichen dauerhaften (Biege-) Verformungen und daraus resultierenden Beschädigungen negativ beeinträchtigt werden. Ein kartenförmiger Datenträger mit den Merkmalen des Oberbegriffs des Anspruchs 1 ist aus dem Dokument EP3499424A1 bekannt.

Aufgabe der vorliegenden Erfindung ist es daher, einen kartenförmigen Datenträger, insbesondere eine Smart Card, anzugeben, bei dem eine sichere und komfortable Benutzung zur Verfügung gestellt werden kann.

Diese Aufgabe wird durch einen kartenförmigen Datenträger mit den Merkmalen des unabhängigen Anspruchs 1 gelöst.

Ausgestaltungen und Weiterbildungen der Erfindung sind in den abhängigen Ansprüchen angegeben und in Bezug auf die Beschreibung und die Figuren offenbart.

Gemäß einem Aspekt der Erfindung wird ein kartenförmiger Datenträger, insbesondere eine Smart Card, bereitgestellt, welcher die folgenden Komponenten umfasst: ein elektronisches Chipmodul mit wenigstens einem Chip und einer Kontaktstruktur und einen Kartenkörper mit einem Anordnungsbereich zur Aufnahme des Chipmoduls. Das Chipmodul ist in dem Anordnungsbereich des Kartenkörpers angeordnet. Der kartenförmige Datenträger weist ferner wenigstens eine erste Holzschicht und wenigstens eine zweite Holzschicht auf, wobei der kartenförmige Datenträger aus einer Ruheposition durch eine externe Krafteinwirkung in eine gebogene Position biegbar ist. Zwischen der ersten Holzschicht und der zweiten Holzschicht ist wenigstens ein Rückstellelement zur Erhöhung der Rückstellkraft des kartenförmigen Datenträgers angeordnet, wobei das Rückstellelement derart ausgebildet ist, dass der kartenförmige Datenträger bei einem Wegfall der externen Krafteinwirkung aus der gebogenen Position automatisch, insbesondere elastisch, in die Ruheposition rückführbar ist.

Im Rahmen der Anmeldung umfasst das Chipmodul wenigstens einen Chip und eine Kontaktstruktur. Somit kann eine kontaktbasierte Datenübertragung zwischen der Smart Card und einem Lesegerät hergestellt werden. Insbesondere ist hierbei bevorzugt der Chip über Drähte mit Kontakten der Kontaktstruktur in Verbindung gesetzt. Die Kontakte können in ihrer Anzahl, Größe und Position durch internationale Normen festgelegt werden, damit die Funktion der Smart Card in jedem Lesegerät sichergestellt werden kann. Es können jedoch weitere Komponenten für das Chipmodul vorgesehen sein, wie beispielsweise ein Kondensator oder eine Antenne (als Spule) zur kapazitiven oder induktiven kontaktlosen Datenübertragung. Eine kontaktlose Smart Card kann mit einem Lesegerät durch elektromagnetische Wellen kommunizieren, wobei die Smart Card ähnlich einem Sende- und Empfangsgerät funktionieren kann. Insbesondere erzeugen vom Lesegerät ausgesendete elektromagnetische Wellen ein schwingendes elektromagnetisches Feld, welches beispielsweise in der Spule bzw. Antenne des Chipmoduls eine schwingende elektrische Spannung erzeugt, wodurch der Chip mit Strom versorgt werden kann. Dabei können die Schwingungen der Spannung als Signal aufgefangen und in dem Chip in Daten umgesetzt werden. Diese Daten können wiederum im Chip verarbeitet und in Veränderungen des elektromagnetischen Feldes umgesetzt werden, welche wiederum vom Lesegerät aufgefangen und in Daten umgesetzt werden können. Insgesamt kann daher das Chipmodul eine kontaktbasierte und/oder kontaktlose Datenübertragung ermöglichen.

Im Rahmen der Anmeldung ist bevorzugt vorgesehen, dass der Anordnungsbereich zur Aufnahme des Chipmoduls durch eine Aussparung im Kartenkörper gebildet ist, in dem das Chipmodul aufgenommen ist oder dass der Anordnungsbereich zur Aufnahme des Chipmoduls durch ein funktionales Modul, insbesondere auf der Oberfläche des Kartenkörpers, gebildet ist, in das das Chipmodul integriert ist. Insbesondere kann der Kartenkörper durch mehrere Schichten gebildet sein, wobei eine Aussparung in den Schichten vorgesehen ist, um das Chipmodul darin aufzunehmen. Dies hat den Vorteil einer geschützten und platzsparenden Anordnung des Chipmoduls innerhalb des Kartenkörpers des kartenförmigen Datenträgers.

Ferner bezeichnet im Rahmen der Anmeldung die Ruheposition des kartenförmigen Datenträgers eine Position, wobei im Wesentlichen keine externe Krafteinwirkung auf den kartenförmigen Datenträger ausgeübt wird. Wenn eine externe Kraft auf den kartenförmigen Datenträger einwirkt, kann diese externe Krafteinwirkung eine Verformung des kartenförmigen Datenträgers bewirken. Mit einer externen Krafteinwirkung kann im Rahmen der Anmeldung beispielsweise eine Verbiegung des kartenförmigen Datenträgers mit der Hand eines Benutzers oder eine Verformung des kartenförmigen Datenträgers innerhalb eines Geldautomaten oder eines Geldbeutels gemeint sein. Es sind weitere externe Krafteinwirkungen, wie beispielsweise von Stößen oder Druck auf den kartenförmigen Datenträger, denkbar. Somit kann die Ruheposition beispielsweise jene Position darstellen, wobei der Kartenkörper des kartenförmigen Datenträgers eine im Wesentlichen exakte planare Fläche bildet und nahezu keine Verformung aufweist. Die gebogene Position des kartenförmigen Datenträgers beschreibt insbesondere eine auftretende Verformung des kartenförmigen Datenträgers, wie beispielsweise eine Auslenkung oder eine Verdrehung oder eine Verbiegung. Beispielhaft kann dabei umfasst sein, dass der Kartenkörper bzw. der kartenförmige Datenträger durch die Hand des Benutzers aus der planaren Ebene heraus verbogen wird und die planare Ebene des Kartenkörpers zumindest teilweise abgewinkelt wird. Mit anderen Worten kann die gebogene Position eine Verformung des Kartenkörpers des kartenförmigen Datenträgers darstellen. Anders gesagt bewirkt die externe Krafteinwirkung eine Überführung aus der Ruheposition in die gebogene Position.

Im Rahmen der Anmeldung ist ein Rückstellelement zur Erhöhung der Rückstellkraft des kartenförmigen Datenträgers vorgesehen. Die Rückstellkraft beschreibt beispielsweise eine Kraft, welche der externen Krafteinwirkung entgegenwirken kann. Insbesondere beschreibt die Rückstellkraft eine Kraft, welche den kartenförmigen Datenträger aus der gebogenen Position in die Ruheposition bei einem Wegfall der externen Krafteinwirkung zurückführen kann. Dabei ist vorgesehen, dass der kartenförmige Datenträger bei einem Wegfall der externen Krafteinwirkung aus der gebogenen Position automatisch, insbesondere elastisch, in die Ruheposition rückführbar ist. Mit anderen Worten kann der kartenförmige Datenträger selbstständig in die Ruheposition zurückgeführt werden. Dies bedeutet insbesondere, dass der kartenförmige Datenträger aufgrund des Rückstellelementes bis zu einem bestimmten Maß verformt werden kann, um danach ohne dauerhafte Verformung elastisch in die Ruheposition zurückzukehren. Insbesondere kann der kartenförmige Datenträger aufgrund des Rückstellelementes elastisch verformt werden, da der kartenförmige Datenträger von allein wieder seine ursprüngliche Form in der Ruheposition annehmen kann.

Die Erfindung hat den Vorteil, dass aufgrund des Rückstellelementes sowohl eine mechanische Stabilisierung bzw. Verstärkung des kartenförmigen Datenträgers als auch eine automatische Rückführung in die Ruheposition bereitgestellt werden kann. Aufgrund der elastischen Rückführung in die Ruheposition kann ebenso sichergestellt werden, dass elektronische Komponenten, wie beispielsweise das Chipmodul, aufgrund einer externen Krafteinwirkung keine dauerhafte plastische Verformung und damit eine Beschädigung erfahren. Folglich kann eine sichere und komfortable Benutzung des kartenförmigen Datenträgers zur Verfügung gestellt werden.

Vorzugsweise kann vorgesehen sein, dass das Rückstellelement ein Elastizitätsmodul im Bereich von wenigstens 100 kN/mm² und höchstens 500 kN/mm², insbesondere 200 kN/mm² und/oder eine Festigkeit von wenigstens 1100 N/mm² und höchstens 1800 N/mm², insbesondere zwischen 1400 N/mm² und 1700 N/mm², aufweist. Das Elastizitätsmodul ist ein bekannter Wert aus der Werkstofftechnik und beschreibt den proportionalen Zusammenhang zwischen Spannung und Dehnung bei der Verformung eines Körpers, insbesondere des Rückstellelementes. Die Festigkeit ist ebenso ein bekannter Wert aus der Werkstofftechnik und beschreibt die Beanspruchbarkeit durch mechanische Belastungen, bevor eine unzulässige Verformung auftritt, insbesondere eine plastische Verformung oder auch ein Bruch. Die Festigkeit bezeichnet insbesondere eine mechanische Spannung, der ein Körper, insbesondere das Rückstellelement während einer Verformung widerstehen kann. Für die Festigkeit kann man beispielsweise zwischen einer Zug-, Druck-, Biegungs-, oder Scherungs-Festigkeit unterscheiden. Vorteilhafterweise kann hier mittels des Elastizitätsmoduls und/oder der Festigkeit eine Art Elastizitätsgrenze beschrieben werden, welche jene maximal mechanische Spannung aufgrund einer externen Krafteinwirkung darstellt, unterhalb derer das Rückstellelement elastisch ist und insbesondere selbstständig wieder die Ruheposition bzw. die ursprüngliche Form annehmen kann, wenn die externe Krafteinwirkung wegfällt. Mit anderen Worten kann dies eine Art reversible Verformung darstellen. Beim Überschreiten der Elastizitätsgrenze tritt insbesondere eine irreversible, plastische Verformung wie beispielsweise ein Bruch ein. Da die Werte für die Festigkeit und/oder das Elastizitätsmodul sehr hoch sind, kann eine mechanische Stabilität des kartenförmigen Datenträgers sowie eine elastische Verformung bis zu einer hohen mechanischen Spannung garantiert werden. Dies verbessert insgesamt die mechanischen Eigenschaften des kartenförmigen Datenträgers.

Bevorzugt kann vorgesehen sein, dass das Rückstellelement aus Federstahl gebildet ist. Federstahl kann beispielsweise ein Elastizitätsmodul von ungefähr 206 kN/mm² und eine Festigkeit zwischen 1400 N/mm² und 1700 N/mm² aufweisen. Im Vergleich zu normalem Baustahl weist Federstahl eine höhere Festigkeit auf. Die Verwendung von Federstahl als Material für das Rückstellelement hat den Vorteil, dass Federstahl optimale mechanische Eigenschaften in Bezug auf Verformbarkeit und Festigkeit aufweist, bei gleichzeitiger Zähigkeit. Einerseits kann daher das Rückstellelement mechanisch stabil und andererseits elastisch ausgebildet sein. Aufgrund der sehr hohen Festigkeit kann das Rückstellelement aus Federstahl sehr weit gebogen werden, bis es bricht oder dauerhaft bzw. plastisch seine Form ändert.

Vorteilhafterweise kann vorgesehen sein, dass das Rückstellelement bandförmig ausgebildet ist, wobei das Rückstellelement in einer longitudinalen oder transversalen Richtung zur Längsachse des Kartenkörpers angeordnet ist. Die bandförmige Ausbildung des Rückstellelementes stellt eine platzsparende Anordnung innerhalb des Kartenkörpers dar. Da kartenförmige Datenträger bevorzugt einen rechteckigen Kartenkörper aufweisen, verläuft die Längsachse des Kartenkörpers zentriert in Längsrichtung in der Ebene des Kartenkörpers. Das Rückstellelement kann dabei bevorzugt in einer longitudinalen Richtung zur Längsachse, mit anderen Worten parallel zur Längsachse, zwischen der ersten Holzschicht und der zweiten Holzschicht angeordnet sein. Insbesondere kann das Rückstellelement zentriert entlang der Längsachse des Kartenkörpers angeordnet sein. Alternativ kann das Rückstellelement in einer transversalen Richtung zur Längsachse, mit anderen Worten quer zur Längsachse, zwischen der ersten Holzschicht und der zweiten Holzschicht angeordnet sein. Dabei kann insbesondere das Rückstellelement zentriert transversal zur Längsachse des Kartenkörpers angeordnet sein. Generell können beliebig viele Rückstellelemente zwischen der ersten Holzschicht und der zweiten Holzschicht angeordnet werden. Bevorzugt können zwei oder vier Rückstellelemente vorgesehen sein. Die Rückstellelemente können beispielsweise zentriert oder außermittig zwischen der ersten Holzschicht oder der zweiten Holzschicht angeordnet sein. Die Anordnung des Rückstellelementes oder der Rückstellelemente zwischen der ersten und der zweiten Holzschicht hat den Vorteil, dass das Rückstellelement als mechanische Verstärkung geschützt gelagert ist und zentral im Kartenkörper für die mechanische Stabilisierung angeordnet ist.

Insbesondere weist die erste, bevorzugt rechteckig ausgebildete, Holzschicht eine Oberfläche und eine (gegenüberliegende) Unterfläche auf. Analog weist die zweite, bevorzugt rechteckig ausgebildete, Holzschicht eine Oberfläche und eine Unterfläche auf. Dabei ist bevorzugt die Unterfläche der ersten Holzschicht der Oberfläche der zweiten Holzschicht zugewandt angeordnet. Jede Holzschicht kann weiterhin eine rechte Seitenkante und eine linke Seitenkante sowie eine obere Längskante und eine untere Längskante aufweisen. Das Rückstellelement oder die Rückstellelemente kann/können bevorzugt zur Anordnung zwischen den beiden Holzschichten an der Unterfläche der ersten Holzschicht angeordnet sein. Alternativ oder zusätzlich ist es denkbar, dass das Rückstellelement oder die Rückstellelemente an der Oberfläche der zweiten Holzschicht angeordnet sind. Insgesamt hat dies den Vorteil, dass das Rückstellelement oder die Rückstellelemente flexibel zwischen den beiden Holzschichten angeordnet sein kann bzw. können. Bevorzugt kann das Rückstellelement oder die Rückstellelemente in der Nähe der Seitenkanten oder der Längskanten angeordnet sein.

Vorzugsweise kann vorgesehen sein, dass das Rückstellelement homogen zwischen der ersten Holzschicht und der zweiten Holzschicht angeordnet ist. Beispielhaft kann dies durch eine Anordnung von vier Rückstellelementen erzielt werden, welche in der Nähe der Seitenkanten und der Längskanten der ersten Holzschicht angeordnet sind. Dabei kann jeweils ein Rückstellelement entlang einer jeweiligen Kante, also der rechten und linken Seitenkante und der oberen und unteren Längskante, der ersten Holzschicht angeordnet werden. Alternativ kann dies auch durch ein Rückstellelement erzielt werden, welches zentral und longitudinal zur Längsachse des Kartenkörpers angeordnet ist. Die homogene Verteilung des Rückstellelementes hat den Vorteil, dass eine externe Krafteinwirkung auf den Kartenkörper bzw. den kartenförmigen Datenträger gleichmäßig verteilt werden kann.

Vorgesehen ist, dass zwischen der ersten Holzschicht und der zweiten Holzschicht eine Kernschicht angeordnet ist, wobei das Rückstellelement an der Kernschicht angeordnet ist. Die Verwendung einer Kernschicht hat den Vorteil, dass beliebig viele weitere elektronische Komponenten des kartenförmigen Datenträgers geschützt gelagert in der Kernschicht angeordnet werden können. Die Kernschicht weist analog zu den Holzschichten eine Oberfläche und eine Unterfläche auf. Insbesondere ist die Oberfläche der Kernschicht der Unterfläche der ersten Holzschicht zugewandt und entsprechend die Unterfläche der Kernschicht der Oberfläche der zweiten Holzschicht zugewandt. Das Rückstellelement kann beispielhaft an der Oberfläche oder an der Unterfläche der Kernschicht angeordnet werden. Insbesondere ist vorgesehen sein, dass ein Rückstellelement an der Oberfläche und ein weiteres Rückstellelement an der Unterfläche der Kernschicht angeordnet ist. Vorzugsweise kann vorgesehen sein, dass die Kernschicht aus Papier, Vlies, Gewebe, Holz oder Kunststoff gebildet ist. Die Kernschicht kann ebenso denkbar aus Polyvinylchlorid, Polyethylen-Terephthalat-Glycol-Copolymer oder Polylactiden gebildet sein. Das Material der Kernschicht kann daher flexibel je nach Anwendungsfall ausgewählt werden.

Es ist ebenso bevorzugt denkbar, dass das Rückstellelement in die Kernschicht eingebettet ist oder an einer Oberfläche der Kernschicht angeordnet ist. Die Einbettung des Rückstellelementes in die Kernschicht hat den Vorteil der geschützten und stabilisierten Lagerung des Rückstellelementes innerhalb des Kartenkörpers. Die Anordnung an einer Oberfläche der Kernschicht kann wie bereits offenbart an der Oberfläche oder der Unterfläche der Kernschicht erfolgen. Insgesamt können hierbei beliebig viele Rückstellelemente vorgesehen werden, welche sowohl in die Kernschicht eingebettet sind oder auch zusätzlich an der Oberfläche und/oder Unterfläche der Kernschicht angeordnet werden. Eine hohe Anzahl an Rückstellelementen kann eine homogene und gleichmäßige Verteilung der externen Krafteinwirkung bewirken und damit eine elastische Verformung des kartenförmigen Datenträgers gewährleisten. Insbesondere kann somit das Risiko für eine plastische dauerhafte Verformung und damit eine Beschädigung des kartenförmigen Datenträgers reduziert werden.

Vorgesehen ist, dass ein Rückstellelement an einer Oberfläche der Kernschicht und ein weiteres Rückstellelement an einer gegenüberliegenden Unterfläche der Kernschicht angeordnet ist. Die Verwendung von zwei Rückstellelementen hat, wie bereits beschrieben, den Vorteil, dass eine homogene und gleichmäßige Verteilung der externen Krafteinwirkung entlang der Dicke des kartenförmigen Datenträgers bewirkt und damit eine elastische Verformung des kartenförmigen Datenträgers gewährleistet werden kann.

In einer besonders bevorzugten Ausführungsform kann vorgesehen sein, dass die Kernschicht wenigstens eine Antenne zur kontaktlosen Datenübertragung aufweist. Die Antenne kann bevorzugt als Spule zur induktiven kontaktlosen Datenübertragung ausgebildet sein, welche mit dem Chip des Chipmoduls gekoppelt ist. Beispielhaft kann die Antenne in der Kernschicht integriert sein und damit geschützt im Kartenkörper gelagert sein. Der kartenförmige Datenträger kann daher vorteilhafterweise als Dual-Interface Karte oder als kontaktlose Smart Card verwendet werden. Es sind generell weitere elektronische Komponenten für den kartenförmigen Datenträger denkbar, welche beispielsweise in die Kernschicht integriert oder auf der Kernschicht angeordnet werden können.

Vorteilhafterweise kann vorgesehen sein, dass zwei, insbesondere bandförmig ausgebildete, Rückstellelemente vorgesehen sind, welche jeweils in einer longitudinalen oder transversalen Richtung zur Längsachse des Kartenkörpers angeordnet sind. Beispielhaft kann vorgesehen sein, dass zwei bandförmig ausgebildete Rückstellelemente auf der Oberfläche der Kernschicht angeordnet sind. Dabei können die Rückstellelemente beide in einer transversalen Richtung zur Längsachse des Kartenkörpers angeordnet sein und insbesondere im Bereich der Seitenkanten der Kernschicht angeordnet sein. Mit anderen Worten kann ein Rückstellelement rechtsseitig und ein Rückstellelement linksseitig an der Kernschicht, jeweils in der Nähe der rechten und linken Seitenkante angeordnet sein. Alternativ kann vorgesehen sein, dass die Rückstellelemente beide in einer longitudinalen Richtung zur Längsachse des Kartenkörpers angeordnet sind und insbesondere im Bereich der Längskanten der Kernschicht angeordnet sind. Mit anderen Worten kann ein Rückstellelement oberseitig und ein Rückstellelement unterseitig an der Kernschicht, jeweils in der Nähe der oberen und unteren Längskante angeordnet sein.

Alternativ oder zusätzlich kann vorgesehen sein, dass zwei, insbesondere bandförmig ausgebildete, Rückstellelemente vorgesehen sind, welche gekreuzt zueinander angeordnet sind. Dabei können die Rückstellelemente auf der Oberfläche der Kernschicht angeordnet sein oder alternativ beispielsweise auf der Oberfläche der zweiten Holzschicht oder der Unterfläche der ersten Holzschicht. Insbesondere sind die Rückstellelemente jeweils entlang der Diagonalen der Kernschicht oder der jeweiligen Holzschicht angeordnet. Anders gesagt überschneiden sich die Rückstellelemente in ihrem Verlauf. Eine gekreuzte Anordnung von zwei Rückstellelementen kann bevorzugt in Abhängigkeit von dem Vorhandensein einer Antenne in der Kernschicht abhängig sein.

Alternativ oder zusätzlich kann vorgesehen sein, dass vier, insbesondere bandförmig ausgebildete, Rückstellelemente vorgesehen sind, wobei zwei Rückstellelemente in einer longitudinalen Richtung zur Längsachse des Kartenkörpers angeordnet sind und zwei Rückstellelemente in einer transversalen Richtung zur Längsachse des Kartenkörpers angeordnet sind. Beispielhaft kann vorgesehen sein, dass die vier bandförmig ausgebildeten Rückstellelemente auf der Oberfläche der Kernschicht angeordnet sind.

Dabei können die Rückstellelemente im Bereich der Seitenkanten und der Längskanten der Kernschicht angeordnet sein. Mit anderen Worten kann ein Rückstellelement jeweils in der Nähe der rechten und linken Seitenkante und in der Nähe der oberen und unteren Längskante angeordnet sein. Die Anordnung der Rückstellelemente kann daher bevorzugt in der Nähe des Umfangs der Kernschicht erfolgen.

Die vorliegende Erfindung wird nachfolgend mit Bezug auf die beiliegenden Figuren beispielhaft im Rahmen von Ausführungsformen beschrieben. Selbstverständlich können einzelne Merkmale der Ausführungsformen, sofern technisch sinnvoll, frei miteinander kombiniert werden, ohne den Rahmen der vorliegenden Erfindung zu verlassen. Elemente mit gleicher Funktion und Wirkungsweise sind in den Figuren mit denselben Bezugszeichen versehen. Die Figuren zeigen nachfolgend schematisch:
Figur 1 eine perspektivische Explosionsansicht eines kartenförmigen Datenträgers nach einem erfindungsgemäßen Ausführungsbeispiel;
Figur 2 eine perspektivische Explosionsansicht eines kartenförmigen Datenträgers nach einem weiteren erfindungsgemäßen Ausführungsbeispiel; und
Figur 3 eine perspektivische Explosionsansicht eines kartenförmigen Datenträgers nach einem dritten erfindungsgemäßen Ausführungsbeispiel.

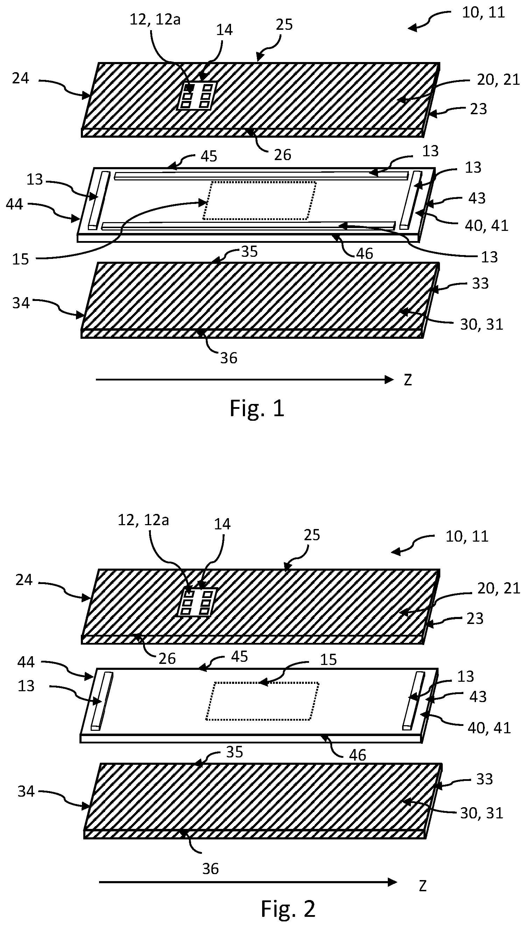

Figur 1 zeigt eine perspektivische Explosionsansicht eines kartenförmigen Datenträgers 10 nach einem erfindungsgemäßen Ausführungsbeispiel. Der kartenförmige Datenträger 10 ist beispielhaft als Smart Card, insbesondere als Kreditkarte, ausgebildet und umfasst die nachfolgenden Komponenten.

Der kartenförmige Datenträger 10 weist einen rechteckigen Kartenkörper 11 auf. Insbesondere weist der Kartenkörper 11 des kartenförmigen Datenträgers 10 einen Schichtaufbau aus. Mit anderen Worten ist der Kartenkörper 11 aus mehreren einzelnen Schichten gebildet, welche übereinandergestapelt angeordnet sind. Hierbei ist eine erste Holzschicht 20, eine zweite Holzschicht 30 und eine Kernschicht 40 für den Kartenkörper 11 vorgesehen. Dabei ist die Kernschicht 40 zwischen der ersten Holzschicht 20 und der zweiten Holzschicht 30 angeordnet. Beispielhaft kann die erste Holzschicht 20 eine Holzfurnieroberseite der Smart Card bilden und die zweite Holzschicht 30 kann eine Holzfurnierunterseite der Smart Card bilden. Die Kernschicht 40 kann beispielsweise aus Papier, Vlies, Gewebe, Holz oder Kunststoff gebildet sein.

Ferner ist ein elektronisches Chipmodul 12 mit wenigstens einem nicht dargestellten Chip und einer Kontaktstruktur 12a vorgesehen. Somit kann eine kontaktbasierte Datenübertragung zwischen der Smart Card und einem Lesegerät hergestellt werden. Es können jedoch weitere Komponenten für das Chipmodul 12 vorgesehen sein, wie beispielsweise ein Kondensator oder eine Antenne (als Spule) zur kapazitiven oder induktiven kontaktlosen Datenübertragung. Beispielhaft kann die Kernschicht 40 eine eingebettete Antenne 15 aufweisen, welche mit dem Chip des Chipmoduls 12 gekoppelt ist. Insgesamt kann daher das Chipmodul 12 eine kontaktbasierte und/oder kontaktlose Datenübertragung ermöglichen.

Der Kartenkörper 11 des kartenförmigen Datenträgers 10 weist einen Anordnungsbereich 14 zur Aufnahme des Chipmoduls 12 auf, wobei das Chipmodul 12 in dem Anordnungsbereich 14 des Kartenkörpers 11 angeordnet ist. Beispielhaft ist der Anordnungsbereich 14 durch eine Aussparung im Kartenkörper 11 gebildet, in dem das Chipmodul 12 aufgenommen und somit geschützt gelagert ist. Insbesondere ist vorgesehen, dass der Anordnungsbereich 14 durch eine Aussparung in der ersten Holzschicht 20 gebildet ist. Mit anderen Worten ist das Chipmodul 12 an einer Oberfläche 21 der ersten Holzschicht 20 innerhalb der Aussparung angeordnet.

Ferner weist die erste Holzschicht 20 die Oberfläche 21 und eine (gegenüberliegende) nicht dargestellte Unterfläche auf. Analog weist die zweite Holzschicht 30 eine Oberfläche 31 und eine nicht dargestellte Unterfläche auf. Weiterhin weist die Kernschicht 40 eine Oberfläche 41 und eine nicht dargestellte Unterfläche auf. Da die Kernschicht 40 zwischen der ersten Holzschicht 20 und der zweiten Holzschicht 30 angeordnet ist, ist die Oberfläche 41 der Kernschicht 40 der Unterfläche der ersten Holzschicht 20 zugewandt angeordnet. Analog ist die Unterfläche der Kernschicht 40 der Oberfläche 31 der zweiten Holzschicht 30 zugewandt angeordnet.

Weiterhin weist die erste Holzschicht 20 eine rechte Seitenkante 23 und eine linke Seitenkante 24 sowie eine obere Längskante 25 und eine untere Längskante 26 auf. Mit anderen Worten bilden die Kanten eine rechteckige Grundform aus. Analog weist die zweite Holzschicht 30 eine rechte Seitenkante 33 und eine linke Seitenkante 34 sowie eine obere Längskante 35 und eine untere Längskante 36 auf. Ebenso weist die Kernschicht 40 eine rechte Seitenkante 43 und eine linke Seitenkante 44 sowie eine obere Längskante 45 und eine untere Längskante 46 auf. Die Längskanten verlaufen jeweils parallel zu der Längsachse Z des Kartenkörpers 11. Die Seitenkanten verlaufen insbesondere transversal bzw. senkrecht zu der Längsachse Z des Kartenkörpers 11.

Weiterhin ist der kartenförmige Datenträger 10 aus einer Ruheposition durch eine externe Krafteinwirkung in eine gebogene Position biegbar. Der kartenförmige Datenträger 10 ist in Figur 1 in der Ruheposition dargestellt. Die Ruheposition bezeichnet insbesondere eine Position, wobei im Wesentlichen keine externe Krafteinwirkung auf den kartenförmigen Datenträger 10 ausgeübt wird. Eine externe Krafteinwirkung, beispielsweise ein Verbiegen des kartenförmigen Datenträgers 10 mittels der Hand eines Benutzers, kann eine Verformung des kartenförmigen Datenträgers 10 bewirken. Die nicht dargestellte gebogene Position kann eine Verformung des Kartenkörpers 11 des kartenförmigen Datenträgers 10 bezeichnen. Anders gesagt bewirkt die externe Krafteinwirkung eine Überführung aus der Ruheposition in die gebogene Position.

Weiterhin sind zwischen der ersten Holzschicht 20 und der zweiten Holzschicht 30 vier Rückstellelemente 13 zur Erhöhung der Rückstellkraft des kartenförmigen Datenträgers 10 angeordnet, wobei jedes Rückstellelement 13 derart ausgebildet ist, dass der kartenförmige Datenträger 10 bei einem Wegfall der externen Krafteinwirkung aus der gebogenen Position automatisch, insbesondere elastisch, in die Ruheposition rückführbar ist. Die Verwendung von Rückstellelementen 13 hat den Vorteil, dass der kartenförmige Datenträger 10 bis zu einem bestimmten Maß verformt werden kann, um danach ohne dauerhafte Verformung elastisch in die Ruheposition zurückzukehren. Weiterhin bewirken die Rückstellelemente 13 vorteilhafterweise eine mechanische Stabilisierung bzw. Verstärkung des kartenförmigen Datenträgers 10.

Beispielhaft ist jedes Rückstellelement 13 aus Federstahl gebildet. Federstahl kann beispielsweise ein Elastizitätsmodul von ungefähr 206 kN/mm² und eine Festigkeit zwischen 1400 N/mm² und 1700 N/mm² aufweisen. Jedes Rückstellelement 13 ist beispielhaft bandförmig ausgebildet. Die bandförmige Ausbildung stellt eine platzsparende und kompakte Anordnung innerhalb des kartenförmigen Datenträgers 10 dar. Beispielhaft sind zwei Rückstellelemente 13 longitudinal (parallel) und zwei Rückstellelemente 13 transversal (senkrecht) zur Längsachse Z des Kartenkörpers 11 angeordnet. Dabei sind die Rückstellelemente 13 an der Oberfläche 41 der Kernschicht 40 angeordnet. Die Rückstellelemente 13 sind im Bereich der Seitenkanten 43, 44 und der Längskanten 45, 46 der Kernschicht 40 angeordnet. Mit anderen Worten kann ein Rückstellelement 13 jeweils in der Nähe der rechten und linken Seitenkante 43, 44 und in der Nähe der oberen und unteren Längskante 45, 46 angeordnet sein. Die Anordnung der Rückstellelemente 13 kann daher bevorzugt in der Nähe des Umfangs der Kernschicht 40 erfolgen. Insbesondere sind die Rückstellelemente 13 homogen zwischen der ersten Holzschicht 20 und der zweiten Holzschicht 30 verteilt.

Figur 2 zeigt eine perspektivische Explosionsansicht eines kartenförmigen Datenträgers 10 nach einem weiteren erfindungsgemäßen Ausführungsbeispiel. Der kartenförmige Datenträger 10 ist analog zu Figur 1 ausgebildet. Im Unterschied zu Figur 1 sind in Figur 2 nur zwei bandförmig ausgebildete Rückstellelemente 13 vorgesehen. Die beiden Rückstellelemente 13 sind jeweils in einer transversalen Richtung zur Längsachse Z des Kartenkörpers 11 angeordnet. Insbesondere ist ein Rückstellelement 13 im Bereich der rechten Seitenkante 43 und ein Rückstellelement 13 im Bereich der linken Seitenkante 44 angeordnet.

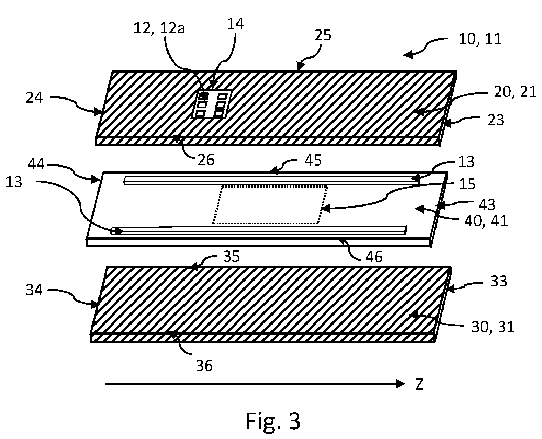

Figur 3 zeigt eine perspektivische Explosionsansicht eines kartenförmigen Datenträgers 10 nach einem dritten erfindungsgemäßen Ausführungsbeispiel. Der kartenförmige Datenträger 10 ist analog zu Figur 1 ausgebildet. Im Unterschied zu Figur 1 sind in Figur 3 nur zwei bandförmig ausgebildete Rückstellelemente 13 vorgesehen. Die beiden Rückstellelemente 13 sind jeweils in einer longitudinalen Richtung zur Längsachse Z des Kartenkörpers 11 angeordnet. Insbesondere ist ein Rückstellelement 13 im Bereich der oberen Längskante 45 und ein Rückstellelement 13 im Bereich der unteren Längskante 46 angeordnet.

Generell kann die Anzahl der Rückstellelemente 13 sowie deren Anordnung zwischen der ersten Holzschicht 20 und der zweiten Holzschicht 30 flexible je nach Anwendungsfall angepasst werden.

### Bezugszeichenliste

- 10: kartenförmiger Datenträger
- 11: Kartenkörper
- 12: Chipmodul
- 12a: Kontaktstruktur
- 13: Rückstellelement
- 14: Anordnungsbereich
- 15: Antenne
- 20: erste Holzschicht
- 21: Oberfläche
- 23: rechte Seitenkante
- 24: linke Seitenkante
- 25: obere Längskante
- 26: untere Längskante
- 30: zweite Holzschicht
- 31: Oberfläche
- 33: rechte Seitenkante
- 34: linke Seitenkante
- 35: obere Längskante
- 36: untere Längskante
- 40: Kernschicht
- 41: Oberfläche
- 43: rechte Seitenkante
- 44: linke Seitenkante
- 45: obere Längskante
- 46: untere Längskante
- Z: Längsachse

## Patentansprüche

1. Kartenförmiger Datenträger (10), insbesondere eine Smart Card, umfassend ein elektronisches Chipmodul (12) mit wenigstens einem Chip und einer Kontaktstruktur (12a) und einen Kartenkörper (11) mit einem Anordnungsbereich (14) zur Aufnahme des Chipmoduls (12), wobei das Chipmodul (12) in dem Anordnungsbereich (14) des Kartenkörpers (11) angeordnet ist, wobei der kartenförmige Datenträger (10) wenigstens eine erste Holzschicht (20) und wenigstens eine zweite Holzschicht (30) aufweist, wobei der kartenförmige Datenträger (10) aus einer Ruheposition durch eine externe Krafteinwirkung in eine gebogene Position biegbar ist,
wobei zwischen der ersten Holzschicht (20) und der zweiten Holzschicht (30) wenigstens ein Rückstellelement (13) zur Erhöhung der Rückstellkraft des kartenförmigen Datenträgers (10) angeordnet ist, wobei das Rückstellelement (13) derart ausgebildet ist, dass der kartenförmige Datenträger (10) bei einem Wegfall der externen Krafteinwirkung aus der gebogenen Position automatisch, insbesondere elastisch, in die Ruheposition rückführbar ist, **dadurch gekennzeichnet, dass**
zwischen der ersten Holzschicht (20) und der zweiten Holzschicht (30) eine Kernschicht (40) angeordnet ist, wobei ein Rückstellelement (13) an einer Oberfläche (41) der Kernschicht (40) und ein weiteres Rückstellelement (13) an einer gegenüberliegenden Unterfläche der Kernschicht (40) angeordnet ist.

2. Kartenförmiger Datenträger (10) nach Anspruch 1, **dadurch gekennzeichnet, dass** das Rückstellelement (13) ein Elastizitätsmodul im Bereich von wenigstens 100 kN/mm² und höchstens 500 kN/mm², insbesondere 200 kN/mm² und/oder eine Festigkeit von wenigstens 1100 N/mm² und höchstens 1800 N/mm², insbesondere zwischen 1400 N/mm² und 1700 N/mm², aufweist.

3. Kartenförmiger Datenträger (10) nach einem der vorhergehenden Ansprüche, **dadurch gekennzeichnet, dass** das Rückstellelement (13) aus Federstahl gebildet ist.

4. Kartenförmiger Datenträger (10) nach einem der vorhergehenden Ansprüche, **dadurch gekennzeichnet, dass** das Rückstellelement (13) bandförmig ausgebildet ist, wobei das Rückstellelement (13) in einer longitudinalen oder transversalen Richtung zur Längsachse (Z) des Kartenkörpers (11) angeordnet ist.

5. Kartenförmiger Datenträger (10) nach einem der vorhergehenden Ansprüche, **dadurch gekennzeichnet, dass** das Rückstellelement (13) homogen zwischen der ersten Holzschicht (20) und der zweiten Holzschicht (30) angeordnet ist.

6. Kartenförmiger Datenträger (10) nach Anspruch 1, **dadurch gekennzeichnet, dass** die Kernschicht (40) aus Papier, Vlies, Gewebe, Holz oder Kunststoff gebildet ist.

7. Kartenförmiger Datenträger (10) nach einem der Ansprüche 1 bis 6, **dadurch gekennzeichnet, dass** die Kernschicht (40) wenigstens eine Antenne (15) zur kontaktlosen Datenübertragung aufweist.

8. Kartenförmiger Datenträger (10) nach einem der vorhergehenden Ansprüche, **dadurch gekennzeichnet, dass** zwei, insbesondere bandförmig ausgebildete, Rückstellelemente (13) vorgesehen sind, welche jeweils in einer longitudinalen oder transversalen Richtung zur Längsachse (Z) des Kartenkörpers (11) angeordnet sind.

9. Kartenförmiger Datenträger (10) nach einem der Ansprüche 1 bis 7, **dadurch gekennzeichnet, dass** zwei, insbesondere bandförmig ausgebildete, Rückstellelemente (13) vorgesehen sind, welche gekreuzt zueinander angeordnet sind.

10. Kartenförmiger Datenträger (10) nach einem der Ansprüche 1 bis 7, **dadurch gekennzeichnet, dass** vier, insbesondere bandförmig ausgebildete, Rückstellelemente (13) vorgesehen sind, wobei zwei Rückstellelemente (13) in einer longitudinalen Richtung zur Längsachse (Z) des Kartenkörpers (11) angeordnet sind und zwei Rückstellelemente (13) in einer transversalen Richtung zur Längsachse (Z) des Kartenkörpers (11) angeordnet sind.

## Claims

1. Card-shaped data carrier (10), in particular a smartcard, comprising an electronic chip module (12) with at least one chip and a contact structure (12a), and comprising a card body (11) with an arrangement region (14) for receiving the chip module (12), wherein the chip module (12) is arranged in the arrangement region (14) of the card body (11), wherein the card-shaped data carrier (10) has at least one first wood layer (20) and at least one second wood layer (30), wherein the card-shaped data carrier (10) can be bent from a neutral position into a bent position by an external action of force,
wherein at least one restoring element (13) for increasing the restoring force of the card-shaped data carrier (10) is arranged between the first wood layer (20) and the second wood layer (30), wherein the restoring element (13) is configured in such a way that the card-shaped data carrier (10) can be restored automatically, in particular elastically, from the bent position into the neutral position when the external action of force is relaxed,
**characterized in that**
a core layer (40) is arranged between the first wood layer (20) and the second wood layer (30), wherein a restoring element (13) is arranged on a surface (41) of the core layer (40) and a further restoring element (13) is arranged on an opposite lower face of the core layer (40).

2. Card-shaped data carrier (10) according to Claim 1, **characterized in that** the restoring element (13) has a modulus of elasticity in the range of at least 100 kN/mm² and at most 500 kN/mm², in particular of 200 kN/mm² and/or a strength of at least 1100 N/mm² and at most 1800 N/mm², in particular of between 1400 N/mm² and 1700 N/mm².

3. Card-shaped data carrier (10) according to one of the preceding claims, **characterized in that** the restoring element (13) is formed from spring steel.

4. Card-shaped data carrier (10) according to one of the preceding claims, **characterized in that** the restoring element (13) is configured in the form of a strip, wherein the restoring element (13) is arranged in a longitudinal or transverse direction with respect to the lengthwise axis (Z) of the card body (11).

5. Card-shaped data carrier (10) according to one of the preceding claims, **characterized in that** the restoring element (13) is arranged homogeneously between the first wood layer (20) and the second wood layer (30).

6. Card-shaped data carrier (10) according to Claim 1, **characterized in that** the core layer (40) is formed from paper, nonwoven, fabric, wood or plastic.

7. Card-shaped data carrier (10) according to one of Claims 1 to 6, **characterized in that** the core layer (40) has at least one antenna (15) for contactless data transmission.

8. Card-shaped data carrier (10) according to one of the preceding claims, **characterized in that** two restoring elements (13), particularly configured in the form of strips, are provided, each of which is arranged in a longitudinal or transverse direction with respect to the lengthwise axis (Z) of the card body (11).

9. Card-shaped data carrier (10) according to one of Claims 1 to 7, **characterized in that** two restoring elements (13), particularly configured in the form of strips, are provided and are arranged crosswise with respect to one another.

10. Card-shaped data carrier (10) according to one of Claims 1 to 7, **characterized in that** four restoring elements (13), particularly configured in the form of strips, are provided, wherein two restoring elements (13) are arranged in a longitudinal direction with respect to the lengthwise axis (Z) of the card body (11) and two restoring elements (13) are arranged in a transverse direction with respect to the lengthwise axis (Z) of the card body (11).

## Revendications

1. Support de données en forme de carte (10), notamment carte à puce, comprenant un module de puce électronique (12) avec au moins une puce et une structure de contact (12a) et un corps de carte (11) avec une zone d'agencement (14) pour recevoir le module de puce (12), le module de puce (12) étant agencé dans la zone d'agencement (14) du corps de carte (11), le support de données en forme de carte (10) présentant au moins une première couche de bois (20) et au moins une deuxième couche de bois (30), le support de données en forme de carte (10) pouvant être plié à partir d'une position de repos dans une position pliée par une action de force externe,
au moins un élément de rappel (13) étant agencé entre la première couche de bois (20) et la deuxième couche de bois (30) pour augmenter la force de rappel du support de données en forme de carte (10), l'élément de rappel (13) étant réalisé de telle sorte que le support de données en forme de carte (10) peut être ramené automatiquement, notamment de manière élastique, de la position pliée à la position de repos lors de la suppression de l'action de force externe,
**caractérisé en ce que**
une couche centrale (40) est agencée entre la première couche de bois (20) et la deuxième couche de bois (30), un élément de rappel (13) étant agencé sur une surface (41) de la couche centrale (40) et un autre élément de rappel (13) étant agencé sur une surface inférieure opposée de la couche centrale (40).

2. Support de données en forme de carte (10) selon la revendication 1, **caractérisé en ce que** l'élément de rappel (13) présente un module d'élasticité dans la plage d'au moins 100 kN/mm² et d'au plus 500 kN/mm², notamment 200 kN/mm² et/ou une résistance d'au moins 1 100 N/mm² et d'au plus 1 800 N/mm², notamment entre 1 400 N/mm² et 1 700 N/mm².

3. Support de données en forme de carte (10) selon l'une quelconque des revendications précédentes, **caractérisé en ce que** l'élément de rappel (13) est formé d'acier à ressort.

4. Support de données en forme de carte (10) selon l'une quelconque des revendications précédentes, **caractérisé en ce que** l'élément de rappel (13) est réalisé en forme de bande, l'élément de rappel (13) étant agencé dans une direction longitudinale ou transversale par rapport à l'axe longitudinal (Z) du corps de carte (11).

5. Support de données en forme de carte (10) selon l'une quelconque des revendications précédentes, **caractérisé en ce que** l'élément de rappel (13) est agencé de manière homogène entre la première couche de bois (20) et la deuxième couche de bois (30).

6. Support de données en forme de carte (10) selon la revendication 1, **caractérisé en ce que** la couche centrale (40) est formée de papier, de non-tissé, de tissu, de bois ou de matière plastique.

7. Support de données en forme de carte (10) selon l'une quelconque des revendications 1 à 6, **caractérisé en ce que** la couche centrale (40) présente au moins une antenne (15) pour la transmission de données sans contact.

8. Support de données en forme de carte (10) selon l'une quelconque des revendications précédentes, **caractérisé en ce qu'**il est prévu deux éléments de rappel (13), notamment réalisés en forme de bande, qui sont agencés chacun dans une direction longitudinale ou transversale par rapport à l'axe longitudinal (Z) du corps de carte (11).

9. Support de données en forme de carte (10) selon l'une quelconque des revendications 1 à 7, **caractérisé en ce qu'**il est prévu deux éléments de rappel (13), notamment réalisés en forme de bande, qui sont agencés de manière croisée l'un par rapport à l'autre.

10. Support de données en forme de carte (10) selon l'une quelconque des revendications 1 à 7, **caractérisé en ce qu'**il est prévu quatre éléments de rappel (13), notamment réalisés en forme de bande, deux éléments de rappel (13) étant agencés dans une direction longitudinale par rapport à l'axe longitudinal (Z) du corps de carte (11) et deux éléments de rappel (13) étant agencés dans une direction transversale par rapport à l'axe longitudinal (Z) du corps de carte (11).
